# EUROPEAN PATENT APPLICATION

(11) **EP 4 811 261 A1**
(43) Date of publication of application: **23.09.2026**
(21) Application number: 25226500.4
(22) Date of filing: 22.12.2025
(51) Int. Cl.: G06Q 30/0601

(54) **METHOD AND SYSTEM FOR A SMART MAKEUP MIRROR**

(30) Priority: 20.03.2025 IN 202521025313
(71) Applicant: Tata Consultancy Services Limited, Maharashtra (IN)
(72) Inventor: CHANDRAMATHY, Nisha Chandran, 695581 Trivandrum, Kerala (IN); KUPPUSAMY SANTHANAM, Sivakumar, 600086 Chennai, Tamil Nadu (IN); ABRAHAM, Sneha Margret, 695581 Trivandrum, Kerala (IN); AMEER, Abinshah, 695581 Trivandrum, Kerala (IN); BENNY, Jithin Ollukkaran, 695581 Trivandrum, Kerala (IN)
(74) Representative: Goddar, Heinz J.

(57) **Abstract**

The embodiments of the present disclosure herein address unresolved problems in smart mirrors available at different points of retails shops. Existing mirrors never have a try to really understand the preference and interest of a user. Also, the existing mirrors are not up to mark providing a voice based chat engine which can be carried in the handbags easily. Embodiments herein provide a method and system for a smart makeup mirror by combining a large language model (LLM) with hardware components. By combining the LLM with hardware components, this device creates an interactive beauty assistant that provides personalized advice capabilities. The system is configured to create an interactive questionnaire which helps someone to identify themselves with their taste and interest in make up in a personalized way of interactive questionnaire process and an advice engine explicitly for makeup.

## Description

### CROSS-REFERENCE TO RELATED APPLICATIONS AND PRIORITY

The present application claims priority to Indian application no. 202521025313, filed on March 20, 2025.

### TECHNICAL FIELD

The disclosure herein generally relates to the field of beauty technology by combining a large language model (LLM), and more particularly, a method and system for a smart makeup mirror by combining a large language model (LLM) with hardware components.

### BACKGROUND

There are smart mirrors available at different points of retails shops especially at textile or beauty shops. However, these smart mirrors hardly attempted to understand the preference and interest of a user. 'Further, they do not have a voice based chat engine, which needs to be carried. Furthermore, in the proposed solution, the questionnaire which is used to identify the personality of the user is also carried out in a funny and interesting way. Often people won't be very comfortable on questing them directly on what color outfit they want to wear. What color do they prefer for lipstick? Or which hairstyle do you like most? But at the same time collecting such data is important to formulate the look and feel of a person with their favorite colors and preferences.

It is intended that solutions enable data collection on makeup preference of subjects or customers without questioning them directly. Also, to further enhance the customer experience, a recommendation engine to address any makeup related query is desired. Both these aspects are feeding through a physical Makeup mirror device in proposed solution. The already available solutions of smart mirrors or makeup mirrors don't support an interactive way of personality and preference data gathering method which is one of the key feature in proposed smart makeup mirror.

### SUMMARY

Embodiments of the present disclosure present technological improvements as solutions to one or more of the above-mentioned technical problems recognized in conventional systems. For example, in one embodiment, a method for a smart makeup mirror by combining a large language model (LLM) with hardware components is provided. The processor-implemented method includes receiving a query from a user for one or more personalized makeup recommendations, and generating an initial question based on the received query, and at least one scenario with default weight and engagement factor values to collect response of the user. Further, one or more successive questions are generated based on the response from the user of the generated previous question using a large language model (LLM). Further, the processor-implemented method includes computing a personality trait score based on the one or more responses from the user, obtaining one or more contextual parameters from the user, wherein the one or more contextual parameters comprise an occasion, a location and a time. Finally, the processor-implemented method includes recommending one or more make-up preferences based on the personality trait of the user and one or more contextual parameters by prompting the LLM model.

In another embodiment, a system for a smart makeup mirror by combining a large language model (LLM) with hardware components is provided. The system comprises a memory storing a plurality of instructions, one or more Input/Output (I/O) interfaces, and one or more hardware processors coupled to the memory via the one or more I/O interfaces. The one or more hardware processors are configured by the instructions to receive a query from a user for one or more personalized makeup recommendations.

The one or more hardware processors are configured by the instructions to generate an initial question based on the received query, and at least one scenario with default weight and engagement factor values to collect response of the user, wherein one or more successive questions are generated based on the response from the user of the generated previous question using a large language model (LLM), compute a personality trait score based on the one or more responses from the user, obtain one or more contextual parameters from the user, wherein the one or more contextual parameters comprise an occasion, a location and a time. Finally, one or more hardware processors are configured by the instructions to recommend one or more make-up preferences based on the personality trait of the user and one or more contextual parameters by prompting the LLM model.

In yet another aspect, there are provided one or more non-transitory machine-readable information storage mediums comprising one or more instructions, which when executed by one or more hardware processors causes a method for a smart makeup mirror by combining a large language model (LLM) with hardware components is provided. The processor-implemented method includes receiving a query from a user for one or more personalized makeup recommendations, and generating an initial question based on the received query, and at least one scenario with default weight and engagement factor values to collect response of the user. Further, one or more successive questions are generated based on the response from the user of the generated previous question using a large language model (LLM). Further, the processor-implemented method includes computing a personality trait score based on the one or more responses from the user, obtaining one or more contextual parameters from the user, wherein the one or more contextual parameters comprise an occasion, a location and a time. Finally, the processor-implemented method includes recommending one or more make-up preferences based on the personality trait of the user and one or more contextual parameters by prompting the LLM model.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates a block diagram of a system for a smart makeup mirror by combining a large language model (LLM) with hardware components, according to some embodiments of the present disclosure.
FIG. 2 is a functional block diagram illustrating the system of FIG. 1 for the smart makeup mirror, according to some embodiments of the present disclosure.
FIG. 3 is an exemplary flow diagram illustrating a processor-implemented method for the smart makeup mirror by combining a large language model (LLM) with hardware components, according to some embodiments of the present disclosure.
FIG. 4A and 4B are exemplary flow diagrams illustrating generation of various questions using generative artificial intelligence (GenAI), according to some embodiments of the present disclosure.

### DETAILED DESCRIPTION OF EMBODIMENTS

Exemplary embodiments are described with reference to the accompanying drawings. In the figures, the left-most digit(s) of a reference number identify the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

A smart makeup mirror represents an innovation in the field of beauty technology. The current technology of smart mirrors or makeup mirrors do not support an interactive way of personality and preference data gathering method.

Embodiments herein provide a method and system for a smart makeup mirror by combining a large language model (LLM) with hardware components. By combining the LLM with hardware components, the method creates device or system with an interactive beauty assistant that has personalized advice capabilities. The system is configured to create an interactive questionnaire which can help users to identify themselves with their taste and interest in make up in a personalized way, via an advice engine explicitly for makeup. The innovation lies in the seamless integration of LLMs with a hardware device, specifically a Raspberry Pi, to process and analyze user input in real-time.

A LLM based makeup advice engine of the system uses natural language processing (NLP) to understand user queries and generate personalized responses. The LLM architecture is designed to process user input, voice in the case of smart makeup mirror, and provide relevant advice on makeup techniques, product recommendations, and skincare routines. This advice is given to the user's specific needs and preferences, considering factors such as skin type, face shape, and personal style.

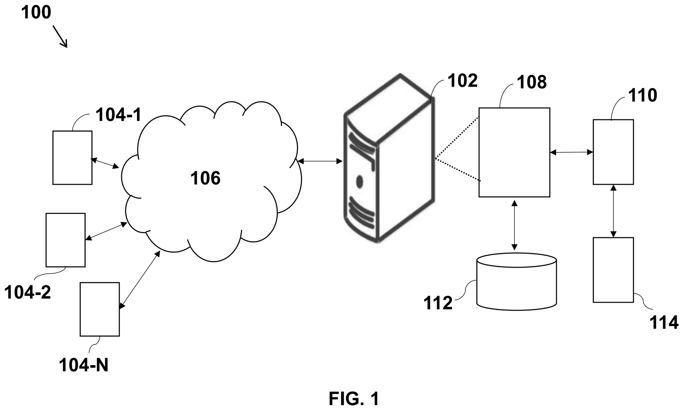

Referring now to the drawings, and more particularly to FIG. 1 through FIG. 4, where similar reference characters denote corresponding features consistently throughout the figures, these embodiments are shown preferred embodiments, and these embodiments are described in the context of the following exemplary system and/or method.

FIG. 1 illustrates a block diagram of a system 100 for a smart makeup mirror by combining the LLM with hardware components, according to some embodiments of the present disclosure. Although the present disclosure is explained considering that the system 100 is implemented on a server, it may be understood that the system 100 may comprise one or more computing devices 102, such as a laptop computer, a desktop computer, a notebook, a workstation, a cloud-based computing environment and the like. It will be understood that the system 100 may be accessed through one or more input/output interfaces 104-1, 104-2... 104-N, collectively referred to as I/O interface 104. Examples of the I/O interface 104 may include, but are not limited to, a user interface, a portable computer, a personal digital assistant, a handheld device, a smartphone, a tablet computer, a workstation, and the like. The I/O interface 104 is communicatively coupled to the system 100 through a network 106.

In an embodiment, the network 106 may be a wireless or a wired network, or a combination thereof. In an example, the network 106 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 106 may include a variety of network devices, including routers, bridges, servers, computing devices, storage devices. The network devices within the network 106 may interact with the system 100 through communication links.

The system 100 supports various connectivity options such as BLUETOOTH^{®}, USB, ZigBee, and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. Further, the system 100 comprises at least one memory 110 with a plurality of instructions, one or more databases 112, and one or more hardware processors 108 which are communicatively coupled with the at least one memory to execute a plurality of modules 114 therein. The components and functionalities of the system 100 are described further in detail.

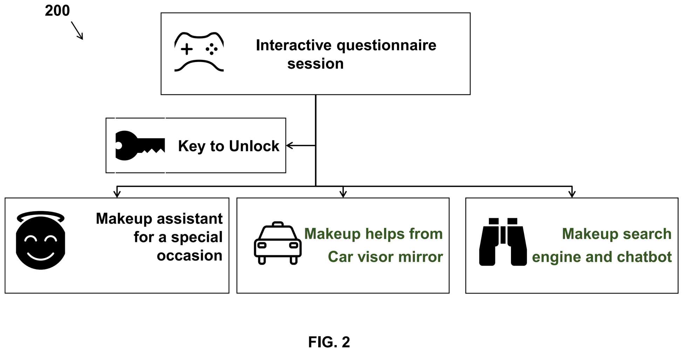

FIG. 2 is a functional block diagram 200 to illustrate system 100 providing a smart makeup mirror by combining the LLM with hardware components, according to some embodiments of the present disclosure. The hardware components of this system include a Raspberry Pi, LCD display, two-way mirror, and microphone. By combining these components along with LLM the smart makeup mirror provides an experience that empowers users to explore and enhance their personal style. By providing real-time beauty advice, the system has the potential to transform the beauty industry and redefine the way people interact with makeup and skincare.

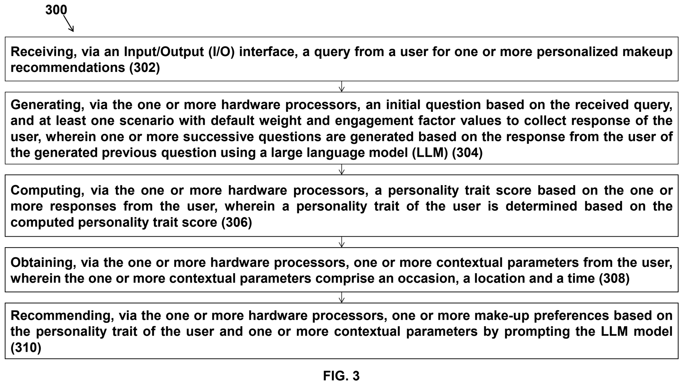

FIG. 3 is a flow diagram illustrating a processor-implemented method 300 for a smart makeup mirror by combining a large language model (LLM) with hardware components implemented by the system 100 of FIG. 1, in accordance with an embodiment of the present disclosure. Functions of the components of the system 100 are now explained through steps of flow diagram in FIG. 3, according to some embodiments of the present disclosure.

Initially, at step 302 of the processor-implemented method 300, the one or more hardware processors 108 are configured by the programmed instructions to receive, via an Input/Output (I/O) interface, a query from a user for one or more personalized makeup recommendations.

In comparison to traditional data collection methods like forms or surveys, here the system 100 uses an interactive questionnaire to gather user data represents a significant technical advancement. This type of data collection enhances user engagement by creating a fun and immersive experience, reducing drop-off rates and increasing the quality of the data gathered. Unlike static forms, the questionnaire session provides a dynamic, real-time feedback, allowing for a more nuanced understanding of user personality/behavior and preferences. The questions that pop up are following up to the previous question. In that way creating a dynamic questionnaire to find out the personality of the user. By integrating elements like decision-making, reaction times, and emotional responses, the interactive session enable more accurate assessments, especially for complex traits like personality, without users feeling the pressure of traditional questionnaires.

In one aspect, the input given to the smart makeup mirror is an audio input about a makeup query by the user. The audio input is then converted to a text using an azure speech to text. Azure speech to text, also known as Azure Speech Services, is a cloud-based application programming interface (API) that utilizes artificial intelligence (AI) to convert spoken language into text in real-time. One of the key features of the azure speech to text is its automatic speech recognition (ASR) capability, which enables accurate transcription of spoken words into text. Azure speech to text allows users to customize models to adapt to specific industries, accents, or vocabulary, ensuring optimal performance in diverse contexts. The API endpoint is built using a RESTful architecture, ensuring seamless communication between the API and LLM. A Liquid Crystal Display (LCD) display is used to display text output. Personalized advice is provided through the LLM's ability to understand user input and generate relevant responses. Efficient information retrieval is enabled through automated speech recognition and text analysis. Finally, the enhanced user experience is achieved through seamless interaction and instant feedback.

At the next step 304 of the processor-implemented method 300, the one or more hardware processors 108 are configured by the programmed instructions to generate an initial question based on the received query, and at least one scenario with default weight and engagement factor values to collect response of the user using the LLM model. Wherein, one or more successive questions are generated based on the response from the user of the generated previous question using a large language model (LLM). For example, a pre-trained Generative Artificial Intelligence (GenAI) model.

In one aspect, the pre-trained Gen AI model can be the Chat Generative Pre-trained Transformer (ChatGPT^{™}), which processes input and responds to a question through a series of steps. Initially, the input question is tokenized into individual words or sub words, which are smaller units of text. Special tokens are added to the input to indicate the start and end of the question. This tokenization enables the pre-trained ChatGPT's transformer architecture to understand the context of the input. Next, the pre-trained ChatGPT applies its fine-tuning adjustments to focus on makeup-related knowledge. This fine-tuning enables the model to retrieve relevant knowledge from its vast database, prioritizing makeup-specific information. The model then searches its database for relevant information related to makeup, ensuring that the response is accurate and relevant.

After retrieving the relevant knowledge, the pre-trained LLM identifies the question type. This identification helps determine the expected response format, whether it's a definition, procedure, or other type of response. With this information, the pre-trained LLM. generates a response based on its contextual understanding, knowledge retrieval, and question type identification. The response generation process involves generating text token-by-token, with each token conditioned on the previous tokens. Fine-tuning ensures that the response is relevant to makeup and provides accurate information.

After generating the response, the pre-trained LLM processes it for fluency and coherence, removing any unnecessary or redundant information. The fine-tuning process enables the pre-trained LLM to develop domain-specific knowledge, improving its contextual understanding and response accuracy. By using specific fine-tuning prompts and continuously evaluating and refining the fine-tuning, the pre-trained LLM can provide more accurate and relevant responses. The output from the pre-trained LLM is displayed on the LCD screen.

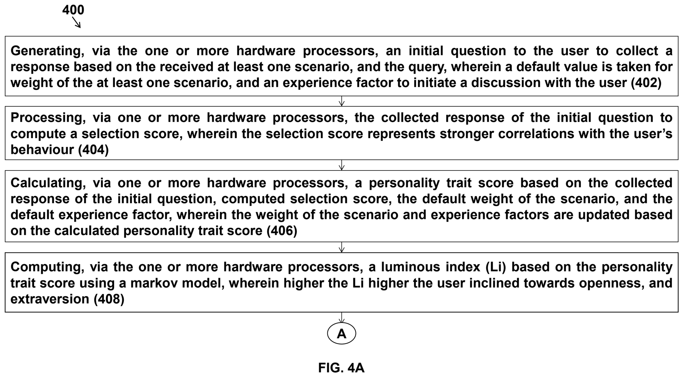

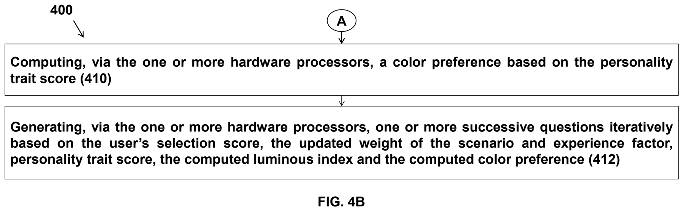

FIG. 4A and 4B are exemplary flow diagrams illustrating generation of various questions using generative artificial intelligence (GenAI), according to some embodiments of the present disclosure. Herein, the one or more questions generated iteratively include one or more steps as follows..

At the step 402, the one or more hardware processors 108 are configured by the programmed instructions to generate an initial question to the user to collect a response based on the received at least one scenario, and the query. Herein, a default value is taken for weight of the at least one scenario, and an experience factor to initiate a discussion with the user.

At the next step 404, the one or more hardware processors 108 are configured by the programmed instructions to compute a selection score by processing the collected response of the initial question. The selection score depends on frequency of the choice of the user. The selection score represents stronger correlations with the user's behaviour. The selection score (*Sc*) is represented as: $Sc = Sc + Δ Sc$ wherein, Δ*Sc* depends on the frequency of a specific choice.

At the next step 406, the one or more hardware processors 108 are configured by the programmed instructions to calculate a personality trait score based on the collected response of the initial question, computed selection score, the default weight of the scenario, and the default experience factor. The personality trait score (Pt) is represented as: $Pt = \sum \left(Ws.Sc.Es\right)$ wherein, Pt is the personality trait score, Ws represents weight of the scenario (how much this scenario influences personality), Sc represents user's selection score (how strongly the user aligns with the scenario) and Es represents Engagement score (how actively the user interacts).

At the next step 408, the one or more hardware processors 108 are configured by the programmed instructions to update the weight of the scenario and experience factors based on the calculated personality trait score. The weight of the scenario (Ws) represented as: $Ws = Ws + ΔWs$ wherein, ΔWs could be +0.2 or -0.2

The weight of the experience factor is updated based on the calculated personality trait score. The weight of the experience factor (Es) represented as: $Es = 1 + \left(Engagement Metric/10\right)$ wherein, the engagement metric represents the time spent by the user to provide first response.

In one example, wherein two different users, user A and user B, are presented with the same three scenarios but their choices and engagement are different. The user A, who scores high in openness and the user B, who scores high in conscientiousness leading to a distinct personality trait scores. The user A prefers creativity, exploration, and novelty. Their choices and engagement reflect curiosity, artistic preferences, and openness to new experiences as shown in table 1.

### Scenarios:

**Table 1**

| **Scenario** | **Scenario Type** | **Weight ( )** | **Choice Score *(Sc)*** | **Engagement *(Es)*** | **Calculation** |
|---|---|---|---|---|---|
| 1 | "Design an Art Exhibit" (Creative) | 0.9 | 7.5 | 0.85 | 0.9×7.5×0.85=5.74 |
| 2 | "Explore a Mystery Island" (Explorative) | 0.8 | 0.8 | 0.9 | 0.8×8.0×0.9=5.76 |
| 3 | "Pick a Logical Puzzle" (Structured) | 0.5 | 0.5 | 0.7 | 0.5×5.0×0.7=1.75 |

wherein, a final openness score is:$Pt = 5.74 + 5.76 = 11.22$ Since openness-related choices have the highest scores, the model identifies user A as highly open-minded and creative. Future scenarios will involve more exploration, creativity, and abstract thinking. The Luminous Index (Li) will increase, leading to brighter, more colorful settings.

The user B prefers organization, structured tasks, and rule-following. Their choices reflect precision, discipline, and careful planning as shown in table 2.

### Scenarios:

**Table 2**

| **Scenario** | **Scenario Type** | **Weight *(Ws)*** | **Choice Score** *(Sc)* | **Engagement** *(Es)* | **Calculation** |
|---|---|---|---|---|---|
| 1 | "Design an Art Exhibit" (Creative) | 0.5 | 4.0 | 0.6 | 0.5×4.0×0.6=1.2 |
| 2 | "Explore a Mystery Island" (Explorative) | 0.4 | 3.5 | 0.5 | 0.4×3.5×0.5=0.7 |
| 3 | "Pick a Logical Puzzle" (Structured) | 0.9 | 8.5 | 0.95 | 0.9×8.5×0.95=7.28 |

wherein, the conscientiousness Score is Pt = 7.28. Since Logical Puzzle (structured) had the highest score, User B is categorized as highly conscientious. Future scenarios will focus on organization, goal-setting, and structured tasks. The Luminous Index (Li) will slightly decrease, leading to dimly lit, more focused settings.

The user A is more creative and has adventurous game levels whereas the user B is more structured and has puzzle-based levels. Thus, it influences gameplay like user A has more fantasy-based settings, vibrant colors, abstract thinking challenges and more light (higher Luminous Index). And, the user B has levels with structured puzzle-solving, organized environments with clear rules and lower light exposure for focus-driven settings.

At the next step 410, the one or more hardware processors 108 are configured by the programmed instructions to compute a luminous index (Li) based on the personality trait score. Wherein higher the Li higher the user inclined towards openness, extraversion. The luminous index (Li) is represented as: $Li = Li + ΔLi$ where the change in values can be +0.1 or -0.1 and ΔLi depends on Sc.

The Luminous Index (LI) adjusts the brightness and visual atmosphere of the game based on personality traits. $Pt = \sum \left(Ws⋅Sc⋅Es\right)$ $Li = γ \times Pt$ wherein, γ is a scaling factor that determines how much personality influences lighting.

In one example, wherein the user A (high openness) has *Pt=*11.22*,* and *Li*=0.1×11.22=1.122. The user A has higher light intensity, vibrant colors, scenarios with open-world exploration, creativity, and discovery. Thus, the AI selects fantasy-themed, and visually striking levels.

The user B (High Conscientiousness) has *Pt*=7.28*,* and *Li*=0.1×7.28=0.728. The user B has lower light intensity, structured, focused environments, scenarios with puzzles, task-oriented challenges, and strategy. Thus, the AI selects realistic, well-organized settings. Comparison of lighting effects based on personality as shown in table 3:

**Table 3**

| **User** | **Openness Score** | **Conscientiousness Score** | **Luminous Index *(Li)*** | **Lighting Impact** |
|---|---|---|---|---|
| User A | 11.22 | 1.75 | 1.122 | Bright, colorful, dreamy worlds |
| User B | 1.9 | 7.28 | 0.728 | Dimly lit, structured, focused gameplay |

At the next step 412, the one or more hardware processors 108 are configured by the programmed instructions to compute a color preference based on the personality trait score using a markov model. The color preference is represented as: $P \left(\left.To\right|From\right) = P \left(C\left(To\right)\left|From\right.\right) / ΣP \left(C\left(i\right)\left|From\right.\right)$ where, *Σ P*(*C*(*i*) | *From*)*:* is the sum of probabilities of encountering all possible first-ranking colors (C(i)) given the "From" personality.

The markov model selects color based on user personality. By adjusting transition probabilities and incorporating more data, the markov model can further refined to generate more personalized and relevant color selection. For example: User A (Openness) and User B (Conscientiousness).

### Simplified Markov Model:

**States:** Each personality type (Openness, Conscientiousness, Extraversion, Agreeableness, Emotional Stability) is a state.
**Transition Probabilities:** where:
   High probability (0.5) for transitions to states with matching dominant colors.
   Low probability (0.125) for transitions to states with different dominant colors.
**Dominant Colors:**
   Openness: Green
   Conscientiousness: Green
   Extraversion: Red
   Agreeableness: Yellow
   Emotional Stability: Green
**Color Selection for User A (Openness):**
   Initial State: Openness (Green)
   Transition 1: High probability of transitioning to Conscientiousness (Green), Emotional Stability (Green), or staying in Openness (Green). Let's assume the model transitions to Conscientiousness.
   Transition 2: High probability of transitioning to Extraversion (Red), Agreeableness (Yellow), or staying in Conscientiousness (Green). Let's assume the model transitions to Extraversion.
   Transition 3: High probability of transitioning to Agreeableness (Yellow), Conscientiousness (Green), or Emotional Stability (Green). Let's assume the model transitions to Agreeableness.
   Final State: Agreeableness.
   Color Selection: Since the final state is Agreeableness, the selected color would be Yellow.
**Color Selection for User B (Conscientiousness):**
   Initial State: Conscientiousness (Green)
   Transition 1: High probability of transitioning to Extraversion (Red), Agreeableness (Yellow), Emotional Stability (Green), or staying in Conscientiousness (Green). Let's assume the model transitions to Emotional Stability.
   Transition 2: High probability of transitioning to Extraversion (Red), Agreeableness (Yellow), Conscientiousness (Green), or staying in Emotional Stability (Green). Let's assume the model transitions to Conscientiousness.
   Transition 3: High probability of transitioning to Extraversion (Red), Agreeableness (Yellow), Emotional Stability (Green), or staying in Conscientiousness (Green). Let's assume the model transitions to Extraversion.
   Final State: Extraversion.
   Color Selection: Since the final state is Extraversion, the selected color would be Red.

Finally at the last step 414, the one or more hardware processors 108 are configured by the programmed instructions to generate the one or more successive questions iteratively based on the user's selection score (*Sc*)*,* weight of the scenario (*Ws*) and experience factor (*Es*)*,* personality trait score, luminous index (*Li*) and color preference. Further, the response is collected for each of the one or more successive questions.

Once the one or more successive questions are generated and response collected iteratively, at the next step 306 of the processor-implemented method 300, the one or more hardware processors 108 are configured by the programmed instructions to compute a personality trait-score based on the collected one or more responses from the user. Wherein a personality trait of the user is determined based on the computed personality trait score.

At the next step 308 of the processor-implemented method 300, the one or more hardware processors 108 are configured by the programmed instructions to obtain one or more contextual parameters from the user. The one or more contextual parameters comprise an occasion, a location and a time.

Finally, at the last step 310 of the processor-implemented method 300, the one or more hardware processors 108 are configured by the programmed instructions to recommend one or more make-up preferences based on the personality trait of the user and one or more contextual parameters by prompting a predefined LLM.

In one example, wherein 2 NPC scenarios are illustrated with their associated options and follow up questions as shown in table 4.
**Scenario 1:** Wedding Guest
   NPC: *"I've been invited to my best friend's wedding, and I want it to look amazing!"*
**Options:**
   1. A classy pastel dress with subtle makeup.
   2. A vibrant red gown with bold lipstick.
   3. A simple floral dress with minimal makeup.
**Follow-up 1:**
   NPC: *"I'm unsure about my hairstyle. Which one would suit my outfit best?"*
   1. A sleek bun with elegant hair accessories.
   2. Loose waves with volume.
   3. A simple ponytail with a soft curl.
**Follow-up 2:**
   NPC: *"What kind of jewelry should I wear?"*
   1. Delicate pearl earrings and a matching necklace.
   2. Statement earrings with a bold bracelet.
   3. Minimal studs and a thin bracelet.
**Scenario 2:** Business Presentation
   NPC: *"I have an important presentation at work. I want to look professional but stylish."*
**Options:**
   1. A tailored blazer with a pencil skirt and nude lipstick.
   2. A bold-colored pantsuit with a sleek ponytail.
   3. A formal blouse and trousers with light makeup.
**Follow-up 1:**
   NPC: *"What about shoes?"*
   1. Classic black heels.
   2. Nude pumps.
   3. Comfortable flats.
**Follow-up 2:**
   NPC: *"Should I add any accessories?"*
   1. A delicate watch and a simple ring.
   2. A bold necklace.

Each NPC scenario and follow-up question allows the user to make choices, helping determine their personality based on preferences for bold, minimalist, or practical styles.

**Table 4**

| S. No. | Combination Code | Scenario 1 (Wedding Guest) | Scenario 2 (Business Presentation) |
|---|---|---|---|
| 1 | S1(111) | Classy pastel dress, sleek bun, delicate pearl earrings | Tailored blazer, classic black heels, delicate watch |
| 2 | S1(112) | Classy pastel dress, sleek bun, statement earrings | Tailored blazer, classic black heels, bold necklace |
| 3 | S1(113) | Classy pastel dress, sleek bun, minimal studs | Tailored blazer, classic black heels, no accessories |
| 4 | S1(121) | Classy pastel dress, loose waves, delicate pearl earrings | Tailored blazer, nude pumps, delicate watch |
| 5 | S1(122) | Classy pastel dress, loose waves, statement earrings | Tailored blazer, nude pumps, bold necklace |
| 6 | S1(123) | Classy pastel dress, loose waves, minimal studs | Tailored blazer, nude pumps, no accessories |
| 7 | S1(131) | Classy pastel dress, simple ponytail, delicate pearl earrings | Tailored blazer, nude pumps, delicate watch |
| 8 | S1(132) | Classy pastel dress, simple ponytail, statement earrings | Tailored blazer, nude pumps, bold necklace |
| 9 | S1(133) | Classy pastel dress, simple ponytail, minimal studs | Tailored blazer, nude pumps, no accessories |
| 10 | S1(211) | Vibrant red gown, sleek bun, delicate pearl earrings | Bold-colored pantsuit, classic black heels, delicate watch |
| 11 | S1(212) | Vibrant red gown, sleek bun, statement earrings | Bold-colored pantsuit, classic black heels, bold necklace |
| 12 | S1(213) | Vibrant red gown, sleek bun, minimal studs | Bold-colored pantsuit, classic black heels, no accessories |
| 13 | S1(221) | Vibrant red gown, loose waves, delicate pearl earrings | Bold-colored pantsuit, nude pumps, delicate watch |
| 14 | S1(222) | Vibrant red gown, loose waves, statement earrings | Bold-colored pantsuit, nude pumps, bold necklace |
| 15 | S1(223) | Vibrant red gown, loose waves, minimal studs | Bold-colored pantsuit, nude pumps, no accessories |
| 16 | S1(231) | Vibrant red gown, simple ponytail, delicate pearl earrings | Bold-colored pantsuit, nude pumps, delicate watch |
| 17 | S1(232) | Vibrant red gown, simple ponytail, statement earrings | Bold-colored pantsuit, nude pumps, bold necklace |
| 18 | S1(233) | Vibrant red gown, simple ponytail, minimal studs | Bold-colored pantsuit, nude pumps, no accessories |
| 19 | S1(311) | Simple floral dress, sleek bun, delicate pearl earrings | Formal blouse and trousers, classic black heels, delicate watch |
| 20 | S1(312) | Simple floral dress, sleek bun, statement earrings | Formal blouse and trousers, classic black heels, bold necklace |
| 21 | S1(313) | Simple floral dress, sleek bun, minimal studs | Formal blouse and trousers, classic black heels, no accessories |
| 22 | S1(321) | Simple floral dress, loose waves, delicate pearl earrings | Formal blouse and trousers, nude pumps, delicate watch |
| 23 | S1(322) | Simple floral dress, loose waves, statement earrings | Formal blouse and trousers, nude pumps, bold necklace |
| 24 | S1(323) | Simple floral dress, loose waves, minimal studs | Formal blouse and trousers, nude pumps, no accessories |
| 25 | S1(331) | Simple floral dress, simple ponytail, delicate pearl earrings | Formal blouses and trousers, nude pumps, delicate watch |
| 26 | S1(332) | Simple floral dress, simple ponytail, statement earrings | Formal blouse and trousers, nude pumps, bold necklace |
| 27 | S1(333) | Simple floral dress, simple ponytail, minimal studs | Formal blouse and trousers, nude pumps, no accessories |

When going outside or travelling to a skin sensitive environment, it would be good to have a smart makeup mirror in the place of a car visor mirror which can assist on different queries related to cosmetic usage for a particular place. A makeup chatbot which is devised in a mirror which can be taken compatible and concise and carried anywhere in a handbag will help with the makeup related problems.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address unresolved problems in smart mirrors available at different points of retails shops. Existing mirrors never have a try to really understand the preference and interest of a user. Also, the existing mirrors are not up to mark providing a voice based chat engine which can be carried in the handbags easily. Embodiments herein provide a method and system for a smart makeup mirror by combining a large language model (LLM) with hardware components. By combining the LLM with hardware components, this device creates an interactive beauty assistant that provides personalized advice capabilities. The system is configured to create an interactive questionnaire which helps someone to identify themselves with their taste and interest in make up in a personalized way of interactive questionnaire process and an advice engine explicitly for makeup.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (300) comprising:
receiving (302), via an Input/Output (I/O) interface, a query from a user for one or more personalized makeup recommendations;
generating (304), via the one or more hardware processors, an initial question based on the received query, and at least one scenario with default weight and engagement factor values to collect response of the user, wherein one or more successive questions are generated based on the response from the user of the generated previous question using a large language model (LLM);
computing (306), via the one or more hardware processors, a personality trait score based on the one or more responses from the user, wherein a personality trait of the user is determined based on the computed personality trait score;
obtaining (308), via the one or more hardware processors, one or more contextual parameters from the user, wherein the one or more contextual parameters comprise an occasion, a location and a time; and
recommending (310), via the one or more hardware processors, one or more make-up preferences based on the personality trait of the user and one or more contextual parameters by prompting the LLM model.

2. The processor-implemented method (300) as claimed in claim 1, wherein generating the one or more successive questions comprising:
generating (402), via the one or more hardware processors, an initial question to the user to collect a response based on the received at least one scenario, and the query, wherein a default value is taken for weight of the at least one scenario, and an experience factor to initiate a discussion with the user;
processing (404), via one or more hardware processors, the collected response of the initial question to compute a selection score, wherein the selection score represents stronger correlations with the user's behaviour;
calculating (406), via one or more hardware processors, a personality trait score based on the collected response of the initial question, computed selection score, the default weight of the scenario, and the default experience factor, wherein the weight of the scenario and experience factors are updated based on the calculated personality trait score;
computing (408), via the one or more hardware processors, a luminous index (Li) based on the personality trait score using a markov model, wherein higher the Li higher the user inclined towards openness, and extraversion;
computing (410), via the one or more hardware processors, a color preference based on the personality trait score; and
generating (412), via the one or more hardware processors, one or more successive questions iteratively based on the user's selection score, the updated weight of the scenario and experience factor, personality trait score, the computed luminous index and the computed color preference.

3. The processor-implemented method (300) as claimed in claim 1, wherein a voice input comprising the query is converted into a text query using a predefined speech recognition technique.

4. The processor-implemented method (300) as claimed in claim 1, wherein the selection score depends on frequency of a choice of the user.

5. The processor-implemented method (300) as claimed in claim 1, wherein the experience factor provides time taken by the user to provide response to the one or more successive questions.

6. A system (100) comprising:
a memory (110) storing instructions;
one or more Input/Output (I/O) interfaces (104); and
one or more hardware processors (108) coupled to the memory (110) via the one or more I/O interfaces (104), wherein the one or more hardware processors (108) are configured by the instructions to:
receive, via an Input/Output (I/O) interface a query from a user for one or more personalized makeup recommendations;
generate an initial question based on the received query, and at least one scenario with default weight and engagement factor values to collect response of the user, wherein one or more successive questions based on the response from the user of the generated previous question using a large language model (LLM);
compute a personality trait score based on the one or more responses from the user, wherein a personality trait of the user is determined based on the computed personality trait score;
obtain one or more contextual parameters from the user, wherein the one or more contextual parameters comprise an occasion, a location and a time; and
recommend one or more make-up preferences based on the personality trait of the user and one or more contextual parameters by prompting an LLM model.

7. The system (100) as claimed in claim 6, wherein the one or more hardware processors are configured to generate one or more questions comprising:
generating an initial question to the user to collect a response based on the received at least one scenario, and the query, wherein a default value is taken for weight of the at least one scenario, and an experience factor to initiate a discussion with the user;
processing the collected response of the first question to compute a selection score, wherein the selection score represents stronger correlations with the user's behaviour;
calculating a personality trait score based on the collected response of the initial question, computed selection score, the default weight of the scenario, and the default experience factor, wherein the weight of the scenario and experience factors are updated based on the calculated personality trait score; and
computing, a luminous index (Li) based on the personality trait score using a markov model, wherein higher the Li higher the user inclined towards openness, and extraversion;
computing a color preference based on the personality trait score; and
generating one or more successive questions iteratively based on the user's selection score, the updated weight of the scenario and experience factor, personality trait score, the computed luminous index and the computed color preference.

8. The system (100) as claimed in claim 6, wherein a voice input comprising the query is converted into a text query using a predefined speech recognition technique.

9. The system (100) as claimed in claim 6, wherein the selection score depends on frequency of a choice of the user.

10. The system (100) as claimed in claim 6, wherein the experience factor provides time taken by the user to provide response to the one or more successive questions.

11. One or more non-transitory machine-readable information storage mediums comprising one or more instructions which when executed by one or more hardware processors cause:
receiving, via an Input/Output (I/O) interface, a query from a user for one or more personalized makeup recommendations;
generating an initial question based on the received query, and at least one scenario with default weight and engagement factor values to collect response of the user, wherein one or more successive questions are generated based on the response from the user of the generated previous question using a large language model (LLM);
computing a personality trait score based on the one or more responses from the user, wherein a personality trait of the user is determined based on the computed personality trait score;
obtaining one or more contextual parameters from the user, wherein the one or more contextual parameters comprise an occasion, a location and a time; and
recommending one or more make-up preferences based on the personality trait of the user and one or more contextual parameters by prompting the LLM model.

12. The one or more non-transitory machine-readable information storage mediums as claimed in claim 11, wherein generating the one or more successive questions comprising:
generating an initial question to the user to collect a response based on the received at least one scenario, and the query, wherein a default value is taken for weight of the at least one scenario, and an experience factor to initiate a discussion with the user;
processing the collected response of the initial question to compute a selection score, wherein the selection score represents stronger correlations with the user's behaviour;
calculating a personality trait score based on the collected response of the initial question, computed selection score, the default weight of the scenario, and the default experience factor, wherein the weight of the scenario and experience factors are updated based on the calculated personality trait score;
computing a luminous index (Li) based on the personality trait score using a markov model, wherein higher the Li higher the user inclined towards openness, and extraversion;
computing a color preference based on the personality trait score; and
generating one or more successive questions iteratively based on the user's selection score, the updated weight of the scenario and experience factor, personality trait score, the computed luminous index and the computed color preference.

13. The one or more non-transitory machine-readable information storage mediums as claimed in claim 11, wherein a voice input comprising the query is converted into a text query using a predefined speech recognition technique.

14. The one or more non-transitory machine-readable information storage mediums as claimed in claim 11, wherein the selection score depends on frequency of a choice of the user.

15. The one or more non-transitory machine-readable information storage mediums as claimed in claim 11, wherein the experience factor provides time taken by the user to provide response to the one or more successive questions.
